# EUROPÄISCHE PATENTSCHRIFT

(11) **EP 2 196 082 B1**
(45) Veröffentlichungstag und Bekanntmachung des Hinweises auf die Patenterteilung: **27.02.2013**
(21) Anmeldenummer: 08075928.5
(22) Anmeldetag: 10.12.2008
(51) Int. Cl.: A01F 15/07, A01F 15/10

(54) **Kontiniuerlich arbeitende Rundballenpresse**
Continuously operating baler
Presse à ballots ronds fonctionnant en continu

(43) Veröffentlichungstag der Anmeldung: 16.06.2010
(73) Patentinhaber: Lely Patent N.V., 3147 PA Maassluis (NL)
(72) Erfinder: Reijersen-van Buuren, Willem, Jacobus, 3147 PA Maassluis (NL)
(74) Vertreter: Corten, Maurice Jean F.M.

(56) Entgegenhaltungen:
- EP-A- 1 982 575
- DE-A1- 19 932 336

## Beschreibung

Die Erfindung betrifft eine kontinuierlich arbeitende Rundballenpresse mit einem zum Auswerfen eines fertigen Rundballens aufklappbaren Pressraum und einem dem Pressraum vorgeschalteten Speicherraum mit einem dessen Bodenfläche einnehmenden, antreibbaren Bodenförderer.

Bei Rundballenpressen besteht das Problem, dass während der Arbeitsvorgänge Binden und Ballenausstoß kein Material zugeführt werden kann. Um eine kontinuierliche Materialzufuhr zu erreichen, muss das Material in einem Speicher zwischengespeichert werden. Bei Beginn eines neuen Arbeitszyklus muss sowohl das neu zugeführte als auch das im Speicherraum gesammelte Material gleichzeitig dem Pressraum zugeführt werden.

Die vorstehend beschriebene Rundballenpresse lässt sich der DE 199 32 336 A1 entnehmen. Hierbei ist oberhalb eines Bodenförderers ein Förderrotor angeordnet. Der Bodenförderer wird während der Ballenumhüllung und des Ballenausstoßes stillgesetzt, so dass sich Material im Speicherraum ansammelt. Bodenförderer und Förderrotor sollen zwecks Zwangs-Schnellentleerung in der Entleerungsphase des Materialspeicherraumes mit wesentlich höherer Geschwindigkeit umlaufen als während des normalen Pressenbetriebes, bei dem das Material nur durch den Speicherraum durchgefördert wird.

Nachteilig ist vor allem, dass sich das gespeicherte Material im Speicherraum haufenförmig ansammelt, in sich verwickelt und verknotet. Bei Einschaltung der Schnellentleerung wird dann in kürzester Zeit der gesamte Haufen durch den zwischen Förderrotor und Bodenförderer gebildeten Einzugsspalt gefördert, was Blockaden und damit Arbeitsunterbrechungen verursacht.

Grundsätzlich ist es nachteilig, dass weder in der Befüllphase des Speicherraumes noch in der Entleerungsphase des Speicherraumes und auch nicht in der "Durchförderphase" beim normalen Pressenbetrieb eine Möglichkeit zur Beeinflussung der Materialzuführung in den Pressraum besteht. Sowohl die Ballenform als auch die Ballendichte erfüllen nicht die gestellten Anforderungen. Ein weiterer Nachteil besteht darin, dass dieses Prinzip nicht auf Rundballenpressen mit variablem Pressraum anwendbar ist. Der Ballenstart und auch eine Rechts/ Linksbefüllung des Pressraumes sind hierbei wichtig und lassen sich mit dem Prinzip dieser Zwangs- Schnellentleerung nicht realisieren.

Bei einer anderen Vorrichtung gemäß EP 0 350 514 A1 soll der Speicherraum als flacher Form- und Presskanal für das in der Speicherphase eingeförderte Material ausgebildet sein. Hierdurch wird ein geringer Speicherraum ermöglicht, das vorher gepresste Material expandiert aber in dem leeren Pressraum wieder und kann sich noch ungünstiger im Pressraum ansammeln als bei unverdichteter Speicherung. Außerdem ist eine Trennvorrichtung im Einzugsspalt zum wahlweisen Unterbrechen und Freigeben des Materials vom Speicherraum zum Pressraum notwendig, die gemeinsam mit dem Bodenförderer ein- und ausschaltbar ist. Auch hier besteht keine Möglichkeit, die Materialzufuhr in den Pressraum zu beeinflussen.

Die DE 27 40 299 offenbart ebenfalls eine Rundballenpresse mit Vorkammer und ein- und ausschaltbarem Bodenförderer. Hierbei ist ein Niederhalter vorgesehen, der in einem relativ großen Speicherraum auf das angesammelte Material drücken soll, damit es vom Bodenförderer besser mitgenommen werden kann. Ein weiterer Nachteil besteht hier darin, dass die Übergabe aufgrund der oberhalb des Einzugsspaltes gelegenen Presswalze erschwert wird, weil diese das Material entgegen der Materialflußrichtung fördert. Da der Speicherraum nur langsam entleert wird, muss die Fahrgeschwindigkeit der Presse während der Entleerungsphase des Speicherraumes reduziert werden. Die Ballendichte ist gering, es besteht keine Möglichkeit der Beeinflussung der Zuführung in den Pressraum.

Eine andere Möglichkeit, einen kontinuierlichen Pressenbetrieb zu gewährleisten, besteht darin, in einer Vorkammer bereits einen verdichteten Kernballen zu bilden, der in der Hauptkammer weiterverdichtet , umschnürt und ausgestoßen wird. Pressen dieser Art sind beispielsweise in der DE 196 06 230 A1 oder der DE 10 2005 020 777 A1 dargestellt und beschrieben. Zumindest bei der Letztgenannten ist die Ballendichte verbessert, jedoch ist die Übergabe des Ballens von der Vorkammer in die Hauptkammer kritisch und konstruktiv aufwendig. Aufgrund dieser Nachteile sind jahrzehntelang und weltweit in Wissenschaft und Industrie durchgeführte Entwicklungsarbeiten an kontinuierlich arbeitenden Rundballenpressen über das Versuchsstadium nicht hinausgekommen. Lediglich eine Rundballenpresse des Fabrikats Supertino, Italien ist in der Praxis in kleiner Stückzahl bekannt geworden.

Mit dem Problem einer gleichmäßigen Beschickung von Pressen befasst sich die DE 38 11 649 C1. Hierbei soll die Schwadstärke über die Breite des Erntegutes erfasst und bei Abweichung die gesamte Presse oder eine Querförderschnecke seitlich verschoben werden. Das funktioniert aber nur, wenn die Aufnahmeeinrichtung wesentlich breiter ist als die Presskammer und dieser direkt vorgeschaltet ist.

Auf kontinuierliche Rundballenpressen mit Vorkammer ist diese Lehre nicht übertragbar aufgrund der relativ langen Förderstrecke des Materials vom Aufsammler bis zum Pressraum. Selbst wenn das Material gleichmäßig der Vorkammer zugeführt wird, können ungleichförmige Ballen entstehen, weil die seitlichen Verschiebungen des Aufsammlers bzw. der Querförderschnecke unabhängig von der Ballenform im Pressraum erfolgen und folglich keine Auswirkungen auf die Ballenform haben.

Die EP 1982 575 A1 offenbart eine kontinuierlich arbeitende Ballenpresse für landwirtschaftliches Erntegut, mit einem Laderaum, einer Aufsammelvorrlchtung zum Aufsammeln von auf dem Boden liegenden Erntegut, einem Laderaum-Befüllförderer zur Beförderung des aufgesammelten Ernteguts In den Laderaum sowie einen Laderaum-Bodenförderer) zur Beförderung des Ernteguts im Laderaum weg von dem Befüllförderer sowie mit einer Ballenpressvorrlchtung , die in dem Laderaum angeordnet ist und einen am Einlass ihres Pressraums (21) angeordneten Pressraum-Beschickungsförderer aufweist, dem durch den Laderaum-Bodenförderer Erntegut zuführbar Ist. In dem Laderaum oberhalb des Laderaumbodenförderers zwischen dem Laderaum-Befüllförderer und dem Pressraum-Beschlckungsförderer ist ein Dosierförderer zur Dosierung der dem Pressraum zugeführten Erntegutmenge vorgesehen.

Der Erfindung liegt die Aufgabe zugrunde, die eingangs beschriebene Rundballenpresse zu verbessern und vorgenannte Nachteile zu vermeiden.

Hinsichtlich der Vorrichtung wird die Aufgabe erfindungsgemäß durch die Lehre des Patentanspruches 1 gelöst, wobei in den weiteren Patentansprüchen 2 bis 12 Merkmale aufgeführt sind, die die Lösung in vorteilhafter Weise weiterentwickeln.

Die erfindungsgemäße Lösung ermöglicht in allen Phasen des Betriebes der Rundballenpresse eine optimale Anpassung eines oder mehrerer Förderelemente an die Anforderungen der jeweiligen Phase, z.B. Speicherphase oder normaler Pressenbetrieb, so dass trotz kontinuierlichen Betriebes mit hoher Durchsatzleistung stets die optimale Ballendichte und -form erreicht wird.

Während des normalen Pressenbetriebes laufen die Förderelemente mit voreinstellbarer Drehzahl um. Sensoren messen beispielsweise die Rechts- Linksbefüllung im Pressraum und signalisieren diese an eine Auswerteeinheit, die die Förderelemente in Abhängigkeit von Sensorsignalen so steuert, dass der gewünschte Zustand erreicht wird.

Während der Speicherphase ist zumindest ein Förderelement angehalten. Bei oder nach Schließung des Pressraumes starten vorzugsweise zwei Förderelemente in zeitlichem Abstand nacheinander, laufen in zeitlichem Takt und werden gegebenenfalls mit unterschiedlichen, veränderbaren Geschwindigkeiten angetrieben. Auf diese Weise ist sichergestellt, dass das Material dosiert transportiert wird, anstatt sich zu einem Berg anzusammeln und eine Überlast zu provozieren.

Die Ausführungsform gemäß Anspruch 2 wird in Pressen mit konstantem Pressraum verwendet, während die Ausführungsform gemäß Anspruch 3 für Pressen mit variablem Pressraum vorteilhaft ist.

Wenn der Bodenförderer mehrere hintereinander angeordnete Förderelemente umfasst, lässt sich auf baulich einfache Weise jedem Förderelement ein Sensor zuordnen, was die Auswertung und Ansteuerung vereinfacht.

Eine besonders vorteilhafte Ausführungsform wird dann erreicht, wenn der Bodenförderer aus einem zweigeteilten Förderband besteht, dem sich ein einziges, dem Pressraum vorgeschaltetes Förderband anschließt. Bei normalem Pressenbetrieb und gleichmäßiger Befüllung laufen alle drei Förderbänder mit Nenndrehzahl. Bei ungleicher Befüllung im Pressraum bewirken Sensoren eine Veränderung der Geschwindigkeit einer oder beider Förderbandhälften. Bei Neustart eines Ballens können zwei oder drei Förderbänder in zeitlichem Abstand nacheinander gestartet werden. Zusätzlich kann das dem Pressraum vorgeschaltete Förderband mit voller Drehzahl fördern, während die nachgeschalteten Bänder zunächst mit reduzierter Geschwindigkeit starten.
Vorzugsweise weisen die Förderelemente jeweils einen eigenen Antrieb auf, deren Drehzahlen unabhängig voneinander verstellbar sind.

Zur Steuerung des Bodenförderers ist es grundsätzlich möglich, die Geschwindigkeit mindestens eines Förderelementes ereignis- abängig zu verstellen.

In der Zeichnung sind mehrere Ausführungsbeispiele dargestellt. Es zeigt:
Fig. 1 eine schematische Seitenansicht einer Rundballenpresse mit einem erfindungsgemäßen Bodenförderer,
Fig. 2 eine vergrößerte Draufsicht auf den Bodenförderer in Fig. 1 mit Komponenten, die an eine Steuer-oder Regelvorrichtung angeschlossen sind und
Fig. 3 in schematischer Darstellung eine Draufsicht auf ein zweites Ausführungsbeispiel eines Bodenförderers.

Dargestellt ist eine Kombination einer kontinuierlich arbeitenden Rundballenpresse 1 mit einem Gerät 2 zum Einwickeln von Rundballen mit Folie. Beide Einheiten ruhen auf einem gemeinsamen Fahrgestell 3 mit Tandemachse 4 und einer nur teilweise dargestellten Zugdeichsel 5. Die Rundballenpresse 1 besteht aus einem gestellfesten Vordergehäuse 6 und einem an diesem um eine obere Achse 7 in eine Entladestellung für einen Rundballen aufschwenkbaren Hintergehäuse 8. In diesem Ausführungsbeispiel hat ein Pressraum 9 einen konstanten Durchmesser und wird in Umfangsrichtung von in Seitenwänden ortsfest aber drehbar gelagerten Walzen 10 als Press- und Förderelement begrenzt sowie in axialer Richtung von Seitenwänden. Zwischen einer unteren Walze 11 und einer oberen Walze 12 ist ein Einlassspalt 13 für Erntegut freigelassen. Im Beispiel dieses Einlassspaltes 13 ist in den Seitenwänden ein mit den Presswalzen 10 angetriebener, ortsfest aber drehbar gelagerter Förderrotor 14 gelagert, welcher entlang des Umfanges und in axialer Richtung über die Länge des Förderrotors 14 schraubenlinienförmig versetzt und im Abstand nebeneinander angeordnete Förderzinken 15 aufweist, denen ein ortsfester Abstreiferkamm 16 zugeordnet ist.

Das Gerät 2 zum Einwickeln der Ballen besteht im wesentlichen aus einem antreibbaren Förderboden 17 zum Drehen des Ballens um seine horizontale Längsmittelachse und aus einem um eine vertikale Achse umlaufenden Dreharm 18 mit Folienrolle. Zum Ablegen des Ballens ist der Förderboden um eine Achse 19 schwenkbar ausgebildet. In Fahrtrichtung 20 gesehen ist vorne ein Aufsammler 21 angeordnet, dem eine Schneideinrichtung 22, bestehend aus Schneidwerkrotor 23, Abstreiferkamm 24 und Schneidboden 25 mit mehreren nebeneinander angeordneten, ein- und ausschwenkbaren Schneidmessern 26 nachgeschaltet ist. Zwischen Förderrotor 14 und Schneidwerkrotor 23 ist ein Materialspeicherraum 27 angeordnet, der nach unten durch einen hydraulisch antreibbaren Bodenförderer 28 und seitlich durch Seitenwände 29 begrenzt ist. Alternativ kann auch ein Rollenboden oder ein Stabkettenförderer eingesetzt werden.

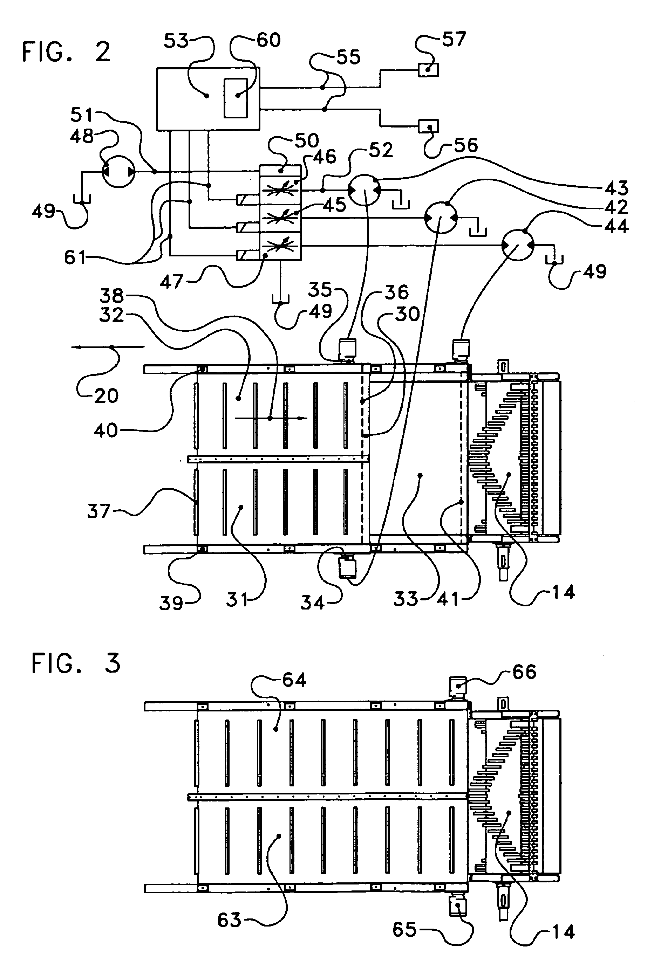

Der Bodenförderer 28 besteht aus zwei vorderen, nebeneinander angeordneten Förderbändern 31, 32 (siehe Fig. 2) und einem hinteren Förderband 33. Die vorderen Förderbänder 31, 32 haben jeweils etwa die halbe Pressraumbreite, während das hintere 33 sich nahezu über die ganze Pressraumbreite erstreckt. Die vorderen Förderbänder 31, 32 und das hintere Förderband 33 verlaufen von vorn nach hinten ansteigend zur Waagerechten. Die abgangsseitigen Umlenkrollen 34, 35 der vorderen Förderbänder 31 überlappen die eingangsseitige Umlenkrolle 36 des hinteren Förderbandes 33, wodurch eine abfallende Stufe 30 entsteht. Die Förderbänder 31 bis 33 weisen an der Außenseite Mitnehmer 37 für das Erntegut in Form von querverlaufenden Leisten oder Stollen auf. Die Bewegung der Förderbänder 31 bis 33 ist entsprechend dem Materialfluss, Pfeil 38, von vorn nach hinten gerichtet. Jedes Förderband ist separat auf Umlenkrollen 34, 39; 35, 40; 41, 36 am Gestell gelagert.

Die abgangsseitigen Umlenkrollen 34, 35, 41 werden durch am Gestell gelagerte Hydromotoren 42 bis 44 angetrieben, siehe Fig. 2. Jeder Hydromotor 42, 43, 44 ist über ein elektromagnetisch betätigbares 3 Wege Proportionalventil 45, 46, 47 mit einer Hydropumpe 48 verbunden, die Druckmittel aus einem Vorratsbehälter 49 entnimmt. Die drei Proportionalventile sind in einem Steuerblock 50 zusammengefasst, der eingangsseitig eine Druckleitung 51 zur Hydropumpe 48 und ausgangsseitig je eine Leitung 52 zu einem Proportionalventil (45, 46, 47) aufweist. Je nach Stellung eines Proportionalventiles (45 bis 47) lässt sich die gewünschte Teilmenge durch den betreffenden Hydromotor 42 bis 44 leiten und damit eine stufenlose Verstellung der Geschwindigkeit jedes Förderbandes 31 bis 33 darstellen. Restmengen, die nicht zum Antrieb des Hydromotors 42 bis 44 benötigt werden, und Rücklaufmengen des Hydromotors strömen in den Vorratsbehälter 49 zurück.

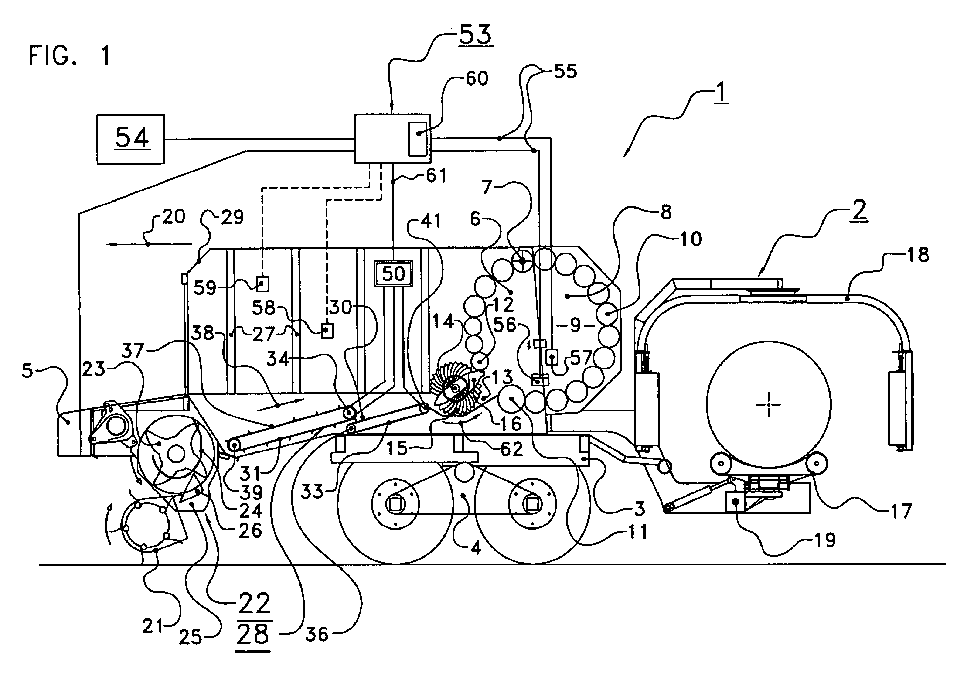

Figur 1 und insbesondere Figur 2 verdeutlichen schematisch eine Steuer- oder Regelvorrichtung 53 für die drei Förderbänder 31 bis 33. Die Steuer- oder Regelvorrichtung 53 ist elektronisch und vorzugsweise mit einem Mikroprozessor CPU ausgebildet. Die Steuer- oder Regelvorrichtung 53 ist einerseits mit einer elektronischen Bedieneinheit 54 und andererseits über Signalleitungen 55 mit auf beiden Seiten des Pressraumes 9 an geeigneter Stelle angebrachten Sensoren 56, 57 verbunden, welche Signale über eine ungleichmäßige Befüllung des Pressraumes über dessen Breite und/ oder den das Fertigstellen des Ballens repräsentierenden Ballendruck an eine Vergleichseinrichtung in der Steuer- oder Regelvorrichtung 53 liefern.

Bei der dargestellten Presse mit konstantem Pressraum 9 sind Vorder 6- und Hintergehäuse 8 während des Pressvorganges mechanisch oder hydraulisch derart verriegelt, dass das Hintergehäuse 8 bei zunehmendem Pressdruck geringfügig nach hinten ausweicht. Dieser Ausweichweg wird mittels der Sensoren 56, 57, die z.B. als ein Linear- oder Drehpotentiometer oder als hydraulischer Druckschalter ausgebildet sind, gemessen und dient einerseits zum Feststellen der Rechts- Linksbefüllung des Pressraumes 9 und andererseits zum Anhalten der Förderbänder 31 bis 32 sowie zum Start einer nicht dargestellten Umhüllvorrichtung, wenn die Sensoren 56, 57 auf beiden Seiten den voreingestellten Wert erreichen. Weitere Signale können untere 58 oder obere 59 Füllstandssensoren im Speicherraum 27, Sensoren für einen Start des Umhüllvorganges, Sensoren für das Schließen des Pressraumes und/ oder weitere Sensoren für wichtige Informationen liefern. Ferner ist in der Steuer- oder Regelvorrichtung 53 eine Zeitschaltung 60 vorgesehen, die über ein Einstellorgan einstellbar ist und Ein- / Ausschaltzeitpunkte, Taktzeiten und/ oder Schaltdauer eines oder mehrerer Förderbänder 31 bis 33 bestimmt. Jedes Proportionalventil 45 bis 47 ist über eine Leitung 61 mit der Steuer- oder Regelvorrichtung 53 verbunden. Die Einstellorgane für die Geschwindigkeitsvorwahl und/ oder die Zeitwahl können entweder an der Steuer- oder Regelvorrichtung 53, an der Rundballenpresse oder im zugehörigen Zugfahrzeug vorgesehen sein.

Die Funktion der dargestellten Rundballenpresse ist wie folgt:
Während des normalen Pressenbetriebes sammelt der Aufsammler 21 das Material vom Boden auf. Das Material wird mittels der Schneideinrichtung 22, der Förderbänder 31 bis 33 und mittels des in Richtung des Pfeiles 62 umlaufenden Förderrotors 14 in den Pressraum 9 gefördert, wo es durch die mit dem Förderrotor 14 ständig umlaufenden Presselemente 10 zu einem Ballen geformt wird. Beide Sensoren 56, 57 liefern gleiche Werte an die Steuer- oder Regelvorrichtung 53. Alle drei Förderbänder 31 bis 33 laufen mit voreingestellter Nenndrehzahl um. Die Geschwindigkeit der vorderen Förderbänder 31, 32 ist zwischen x % und 100 % der Nenndrehzahl in Abhängigkeit von den Sensorsignalen verstellbar. Weichen die Sensorsignale beider Sensoren 56, 57 voneinander ab, so bewirkt die Steuer- oder Regelvorrichtung 53 über eine entsprechende Verstellung des 3 Wege Proportionalventiles 45, 46 des betreffenden Förderbandes eine Veränderung dessen Geschwindigkeit derart, dass die Abweichung beseitigt wird. Ist der Ausweichweg einer Seite des Hintergehäuses 8 größer, so wird die Geschwindigkeit des Förderbandes 31, 32 auf der gegenüberliegenden Seite vergrößert oder die Geschwindigkeit des Förderbandes 31, 32 auf der gleichen Seite verlangsamt.

Erreichen beide Sensoren 56, 57 den für die gewünschte Pressdichte voreingestellten Ausweichweg, bewirkt die Steuer- oder Regelvorrichtung 53 ein Anhalten aller drei Förderbänder (31 bis 33), wodurch kein Material mehr in den Pressraum 9 fließt. Gleichzeitig lösen die Sensorsignale über die Steuer- oder Regelvorrichtung 53 den Start der Umhüllvorrichtung aus. Ist die Umhüllung beendet, wird das Hintergehäuse 8 geöffnet, der Ballen ausgestoßen und das Hintergehäuse 8 wieder geschlossen, was die Sensoren 56, 57 an die Steuer- oder Regelvorrichtung 53 signalisieren. Der Ballen wird in diesem Ausführungsbeispiel an das Gerät 2 zum Einwickeln der Ballen übergeben und in bekannter Weise mit Folie umwickelt.

Vom Start des Umhüllvorganges bis zum Schließen des Hintergehäuses 8 wird das Material im Speicherraum 27 gesammelt. Die beiden vorderen Förderbänder 31, 32 können mit stark reduzierter Geschwindigkeit, vorzugsweise schrittweise, das Material auf das hintere, angehaltene Förderband 33 schieben zwecks gleichmäßiger Befüllung des Speicherraumes 27. Die schräg aufwärts gerichtete Anordnung der Förderbänder 31 bis 33 sorgt für eine bessere Querverteilung des Materials. An der tiefsten Stelle des Speicherraumes 27 nehmen die Förderbänder 31, 32 das angehäufte Material von unten her in gleichmäßigen Schichten weg. Die gleiche Funktion hat auch die zwischen Förderbandende und Förderbandanfang gebildete Stufe 30. In Verbindung mit Mitnehmern 37 auf den Förderbändern (31, 32) lässt sich auf die vorher beschriebene Art und Weise eine gleichmäßige Zuführung von Material aus dem Speicherraum 27 in den Pressraum 9 darstellen. Die Zufuhr von Haufen und dadurch verursachte Blockagen des Förderrotors 14 werden vermieden.

Der neue Presszyklus beginnt zunächst mit dem gleichzeitigen Start des hinteren Förderbandes 33 und eines der beiden vorderen Förderbänder 31, 32, wobei das vordere Förderband 31 oder 32 langsamer anläuft als das hintere 33 und erst nach einer einstellbaren Zeit Y seine Nenndrehzahl erreicht. Das dritte Förderband 32 oder 31 läuft mit einer einstellbaren Verzögerung von z Sekunden gegenüber den beiden gleichzeitig gestarteten Förderbändern 31, 33 oder 32, 33 an. Je nach Materialart, -feuchte werden die Zeiten aufgrund von Erfahrungswerten voreingestellt . Gleiches gilt für die Vorwahl der Geschwindigkeit des oder der Förderbänder 31 bis 33.

Das in Figur 3 dargestellte Ausführungsbeispiel zeigt zwei nebeneinander angeordnete Förderbänder 63, 64 mit jeweils eigenem Antriebsmotor 65, 66. Die Antriebe, die elektrische und die hydraulische Schaltung sind analog zu den vorderen Förderbändern (31, 32) gemäß Fig. 2 ausgestaltet und zeichnerisch hier nicht dargestellt.

Im Fall des normalen Pressenbetriebes laufen beide Förderbänder 63, 64 mit Nenndrehzahl um, wenn die Sensoren 56, 57 eine gleichmäßige Befüllung des Pressraumes 9 signalisieren. Signalisieren die Sensoren 56, 57 eine ungleichmäßige Befüllung, wird die Geschwindigkeit eines 63 oder 64 oder beider Förderbänder 63, 64 verstellt, um eine gleichmäßige Befüllung zu erzeugen.

Während des Speichervorganges sind beide Förderbänder 63, 64 angehalten.

Beim Start eines neuen Ballens läuft zunächst ein Förderband 63, oder 64 innerhalb einer einstellbaren Zeitdauer auf seine Nenndrehzahl hoch. Danach wird das zweite Förderband 64 oder 63 mit voller Geschwindigkeit eingeschaltet.

Im Rahmen der Erfindung ist es auch möglich, den Befüllvorgang des Pressraumes 9 in Abhängigkeit von anderen oder zusätzlichen Parametern zu beeinflussen.

Fig. 1 zeigt in Strichlinie gezeichneter Darstellung einen Sensor 58 für den unteren Füllstand und einen Sensor 59 für den oberen Füllstand des Speicherraumes 27. Die Sensoren 58, 59 sind über Signalleitungen mit der Steuer- oder Regelvorrichtung 53 verbunden und bewirken durch eine Verstellung der Geschwindigkeit und/ oder eine Zeittaktung bzw. durch Wahl der Ein- oder Ausschaltdauer der Förderbänder 31 bis 33, dass der Speicherraum 27 einerseits nie ganz leer wird und andererseits nicht überläuft. Wird der untere Füllstand signalisiert, so bewirkt die Steuer- oder Regelvorrichtung 53 beispielsweise eine Reduzierung der Geschwindigkeit des hinteren Förderbandes 33 bis ein voreinstellbarer Füllstand erreicht ist. Bei Erreichen des oberen Füllstandes wird die Geschwindigkeit der Förderbänder 31, 32 erhöht, so dass mehr Material aus dem Speicherraum 27 abfließt. Auf diese Art und Weise ermöglicht die ständige Pufferung einer kleinen Teilmenge des zufließenden Materials im Speicherraum 27 die Beeinflussbarkeit des Befüllvorganges des Pressraumes 9 während der gesamten Presszeit. Auch Ungleichmäßigkeiten in der Zuführung des Materials in den Pressraum 9 wirken sich nicht auf die Zuführung des Materials in den Pressraum 9 aus.

Erfindungsgemäß ist es auch möglich, dass der Bodenförderer 28 im Pressraum 9 ein sich über etwa die gesamte Pressraumbreite erstreckendes Förderband umfasst, das in Abhängigkeit von den Füllstandssensoren 58, 59 im Speicherraum 27 geschwindigkeits- gesteuert ist. Alternativ oder zusätzlich kann zur Steuerung bei Pressen mit variablem Pressraum auch der Ballendurchmesser als Steuerungsparameter genutzt werden. Die Ausschaltung des Förderbandes erfolgt dabei durch den Start der Umhüllvorrichtung, wobei es zweckmäßig sein kann, auch den pressraumseitigen Förderrotor vorübergehend auszuschalten. Die Ausschaltung kann bei variablem Pressraum auch durch Erreichen des voreingestellten Ballendurchmessers oder in Abhängigkeit vom Antriebsmoment der Presse oder deren Zuführorganen erfolgen.

Nach Einschalten des Förderbandes und ggfs. des Förderrotors wird das Material kontinuierlich und gleichmäßig aus dem Speicherraum in den Pressraum gefördert. Das Förderband kann während des Zuführvorganges in Abhängigkeit von geeigneten Sensoren geschwindigkeits-, oder auch drehmomentabhängig gesteuert sein.

Obwohl die Erfindung an einer Rundballenpresse mit konstantem Pressraum und nachgeschaltetem Gerät zum Einwickeln von Rundballen mit Folie dargestellt und beschrieben wurde, ist diese in gleicher Weise oder im Rahmen des Könnens eines Fachmannes in abgewandelter Weise an Rundballenpressen mit variablem Pressraum oder auch an Rundballenpressen ohne Gerät zum Einwickeln verwendbar.

## Patentansprüche

1. Kontinuierlich arbeitende Rundballenpresse (1) mit einem zum Auswerfen eines fertigen Rundballens aufklappbaren Pressraum (9) und einem dem Pressraum (9) vorgeschalteten Speicherraum (27) mit einem dessen Bodenfläche einnehmenden, antreibbaren Bodenförderer (28), **dadurch gekennzeichnet, dass** der Bodenförderer (28) mehrere Förderelemente (31 bis 33; 63, 64) umfasst, wobei die Geschwindigkeit mindestens eines Förderelementes (31 bis 33; 63, 64) in Abhängigkeit von einer Sensoreinrichtung mit mindestens einem Sensor (56, 57, 58, 59) verstellbar ist und, dass über die Breite des Pressraumes (9) mehrere Sensoren (56, 57) vorgesehen sind, welche auf eine ungleichmäßige Befüllung des Pressraumes (9) über dessen Breite reagieren und eine Verstellung der Geschwindigkeit eines oder mehrerer (31 bis 33; 63, 64) Förderelemente bewirken.

2. Rundballenpresse nach Anspruch 1, **dadurch gekennzeichnet, dass** die Sensoren (56, 57) auf den Druck im Pressraum (9) ansprechen und/oder auf den Ballendurchmesser im Pressraum (9) ansprechen, und/oder den Befüllungsgrad im Speicherraum (27) erfassen.

3. Rundballenpresse nach Anspruch 2, **gekennzeichnet durch** jeweils wenigstens einem Sensor (58, 59) für den unteren und oberen Füllstand des Speicherraumes.

4. Rundballenpresse nach einem oder mehreren der vorhergehenden Ansprüche, **gekennzeichnet durch** einen oder mehrere Sensor/en (56, 57), welcher/ welche das Erreichen des Ballenenddurchmessers, der Pressdichte, den Start der Umschnürungsvorrichtung und/ oder zumindest die Position eines auf- und zuklappbaren Pressraumgehäuseteiles (8) signalisiert/signalisieren.

5. Rundballenpresse nach einem oder mehreren der vorhergehenden Ansprüche, **gekennzeichnet durch** eine Steuer- oder Regelvorrichtung (53) mit einem oder mehreren Stellgliedern (45 bis 47) zur Verstellung der Drehzahl des Antriebes (42, 43, 44) eines oder mehrerer Förderelemente (31 bis 33; 63, 64) abhängig von den Ausgangssignalen wenigstens eines Sensors (56 bis 59) und/ oder mit einer einstellbaren Zeitschaltung (60), welche eine zeitabhängige Steuerung mindestens eines Förderelementes (31 bis 33; 63, 64) bewirkt.

6. Rundballenpresse nach Anspruch 5, **dadurch gekennzeichnet, dass** Sollwerte für die Geschwindigkeit, die Zeitdauer, Einschalt- und / oder Taktzeiten mindestens eines Förderelementes (31 bis 33; 63, 64) an der Steuer- oder Regelvorrichtung (53), an der Rundballenpresse (1) oder am Bediengerät (54) voreinstellbar sind.

7. Rundballenpresse nach einem oder mehreren der Ansprüche 5 bis 6, **dadurch gekennzeichnet, dass** die Steuer- oder Regelvorrichtung (53) erst nach Überschreiten eines vorzugsweise verstellbaren unteren und/ oder oberen Grenzwertes der Sensoren (58, 59) ein Signal an die Stellglieder (50) aussendet.

8. Rundballenpresse nach einem oder mehreren der vorhergehenden Ansprüche, **dadurch gekennzeichnet, dass** ein Sensor (56, 57) als Dreh- oder Linearpotentiometer ausgebildet ist.

9. Rundballenpresse nach Anspruch 5, **dadurch gekennzeichnet, dass** der Drehantrieb wenigstens eines, vorzugsweise hydraulisch antreibbaren Förderelementes (31 bis 33; 63, 64), mittels elektrohydraulischer Stellglieder (45 bis 47) stufenlos verstellbar ist.

10. Rundballenpresse nach einem oder mehreren der vorhergehenden Ansprüche, **dadurch gekennzeichnet, dass** der Bodenförderer (28) ein Förderelement umfasst, das sich über die ganze Breite des Pressraumes erstreckt, oder dass der Bodenförderer (28) wenigstens zwei nebeneinander angeordnete Förderelemente (31,32; 63, 64) umfasst.

11. Rundballenpresse nach einem oder mehreren der vorhergehenden Ansprüche, **dadurch gekennzeichnet, dass** der Bodenförderer (28) mehrere hintereinander angeordnete Förderelementen (31,32,33), oder einen zweigeteilten Förderband (31, 32), dem sich ein einziges, dem Pressraum (9) vorgeschaltetes Förderband (33) anschließt, umfasst, wobei vorzugsweise das Förderbandende des Förderbandes (31, 32) gegenüber dem Förderbandanfang des anschließenden Förderbandes (33) nach oben versetzt ist.

12. Rundballenpresse nach einem oder mehreren der vorhergehenden Ansprüche 1 bis 11, **dadurch gekennzeichnet, dass** die Förderelemente (31 bis 33; 63, 64) einzeln antreibbar und deren Drehzahlen unabhängig voneinander verstellbar sind.

## Claims

1. Continuous round baler (1) comprising a pressing chamber (9), which can be swung open for the discharge of a finished round bale, and a storage chamber (27), which is arranged upstream of the pressing chamber (9) and has a drivable floor conveyor (28) occupying its floor area, **characterized in that** the floor conveyor (28) comprises a plurality of conveying elements (31 to 33; 63, 64), wherein the speed of at least one conveying element (31 to 33; 63, 64) is adjustable in dependence on a sensor device having at least one sensor (56, 57, 58, 59) and **in that** over the width of the pressing chamber (9) a plurality of sensors (56, 57) are provided, which react to an uneven filling of the pressing chamber (9) over its width and effect an adjustment of the speed of one or more (31 to 33; 63, 64) conveying elements.

2. Round baler according to Claim 1, **characterized in that** the sensors (56, 57) respond to the pressure in the pressing chamber (9) and/or to the bale diameter in the pressing chamber (9), and/or detect the degree of filling in the storage chamber (27).

3. Round baler according to Claim 2, **characterized by** respectively at least one sensor (58, 59) for the lower and upper filling level of the storage chamber.

4. Round baler according to one or more of the preceding claims, **characterized by** one or more sensor(s) (56, 57), which signal(s) the achievement of the end diameter of the bale, the pressing density, the start of the binding apparatus and/or at least the position of a swing-open and swing-shut pressing chamber housing part (8).

5. Round baler according to one or more of the preceding claims, **characterized by** a control or regulating apparatus (53) having one or more controlling elements (45 to 47) for adjusting the rotation speed of the drive (42, 43, 44) of one or more conveying elements (31 to 33; 63, 64), depending on the output signals of at least one sensor (56 to 59), and/or having an adjustable interval timer (60), which effects a time-dependent controlling of at least one conveying element (31 to 33; 63, 64).

6. Round baler according to Claim 5, **characterized in that** desired values for the speed, the duration, the switch-on and/or cycle times of at least one conveying element (31 to 33; 63, 64) can be preset on the control or regulating apparatus (53), on the round baler (1) or on the control unit (54).

7. Round baler according to one or more of Claims 5 and 6, **characterized in that** the control or regulating apparatus (53) transmits a signal to the controlling elements (50) only after a preferably adjustable lower and/or upper limit value of the sensors (58, 59) has been crossed.

8. Round baler according to one or more of the preceding claims, **characterized in that** a sensor (56, 57) is configured as a rotary or linear potentiometer.

9. Round baler according to Claim 5, **characterized in that** the rotary drive of at least one, preferably hydraulically driven conveying element (31 to 33; 63, 64) is continuously adjustable by means of electrohydraulic controlling elements (45 to 47).

10. Round baler according to one or more of the preceding claims, **characterized in that** the floor conveyor (28) comprises a conveying element, which extends over the entire width of the pressing chamber, or **in that** the floor conveyor (28) comprises at least two mutually adjacent conveying elements (31,32; 63, 64).

11. Round baler according to one or more of the preceding claims, **characterized in that** the floor conveyor (28) comprises a plurality of conveying elements (31,32,33) arranged one behind the other, or a two-part conveyor belt (31, 32), adjoined by a single conveyor belt (33) arranged upstream of the pressing chamber (9), wherein preferably the conveyor belt end of the conveyor belt (31, 32) is offset upwards in relation to the conveyor belt start of the adjoining conveyor belt (33).

12. Round baler according to one or more of the preceding Claims 1 to 11, **characterized in that** the conveying elements (31 to 33; 63, 64) are individually drivable and their rotation speeds are adjustable independently of one another.

## Revendications

1. Presse à balles rondes (1) fonctionnant en continu comportant une chambre de compression (9) pouvant être relevée pour éjecter une balle ronde finie et une chambre de stockage (27) montée en amont de la chambre de compression (9) et dotée d'un dispositif transporteur de fond (28) pouvant être entraîné, accueillant la surface de fond de ladite chambre de stockage, **caractérisée en ce que** le dispositif transporteur de fond (28) comprend plusieurs éléments transporteurs (31 à 33 ; 63, 64), sachant que la vitesse d'au moins un élément transporteur (31 à 33 ; 63, 64) peut être ajustée avec au moins un capteur (56, 57, 58, 59) en fonction d'un dispositif détecteur, et **en ce que** sont prévus sur la largeur de la chambre de compression (9) plusieurs capteurs (56, 57), qui réagissent à un remplissage non homogène de la chambre de compression (9) sur la largeur de cette dernière et qui provoquent un ajustage de la vitesse d'un ou de plusieurs éléments transporteurs (31 à 33 ; 63, 64).

2. Presse à balles rondes selon la revendication 1, **caractérisée en ce que** les capteurs (56, 57) réagissent à la pression régnant dans la chambre de compression (9) et/ou réagissent au diamètre des balles dans la chambre de compression (9) et/ou détectent le niveau de remplissage dans la chambre de stockage (27).

3. Presse à balles rondes selon la revendication 2, **caractérisée par** respectivement au moins un capteur (58, 59) pour le niveau de remplissage inférieur et le niveau de remplissage supérieur de la chambre de stockage.

4. Presse à balles rondes selon l'une quelconque ou plusieurs des revendications précédentes, **caractérisée par** un ou plusieurs capteurs (56, 57), lequel, lesquels signale(nt) lorsque le diamètre final des balles et la densité de ces dernières sont atteints, lorsque le dispositif de frettage est lancé et/ou lorsqu'au moins la position d'une partie de carter de la chambre de compression (8) pouvant être relevée et rabattue est atteinte.

5. Presse à balles rondes selon l'une quelconque ou plusieurs des revendications précédentes, **caractérisée par** un dispositif de contrôle ou de régulation (53) doté d'un ou de plusieurs éléments de réglage (45 à 47) servant à ajuster la vitesse de l'entraînement (42, 43, 44) d'un ou de plusieurs éléments transporteurs (31 à 33 ; 63, 64) en fonction des signaux de sortie d'au moins un capteur (56 à 59) et/ou doté d'un circuit de temporisation (60) réglable, qui entraîne un contrôle selon le temps d'au moins un élément transporteur (31 à 33 ; 63, 64).

6. Presse à balles rondes selon la revendication 5, **caractérisée en ce que** des valeurs de consigne pour la vitesse, la durée, les temps de mise en service et/ou de cycle d'au moins un élément transporteur (31 à 33 ; 63, 64) sont préalablement réglées au niveau du dispositif de contrôle ou de régulation (53), au niveau de la presse à balles rondes (1) ou au niveau de l'appareil de commande (54).

7. Presse à balles rondes selon l'une quelconque ou plusieurs des revendications 5 à 6, **caractérisée en ce que** le dispositif de contrôle ou de régulation (53) envoie un signal aux éléments de réglage (50) une fois qu'une valeur limite basse et/ou haute, pouvant être réglée, des capteurs (58, 59) est dépassée.

8. Presse à balles rondes selon l'une quelconque des revendications précédentes, **caractérisée en ce qu'**un capteur (56, 57) est réalisé sous la forme d'un potentiomètre rotatif ou linéaire.

9. Presse à balles rondes selon la revendication 5, **caractérisée en ce que** l'entraînement rotatif d'au moins un élément transporteur (31 à 33 ; 63, 64) pouvant être entraîné de préférence de manière hydraulique peut être ajusté en continu au moyen d'éléments de réglage (45 à 47) électrohydrauliques.

10. Presse à balles rondes selon l'une quelconque ou plusieurs des revendications précédentes, **caractérisée en ce que** le dispositif transporteur de fond (28) comprend un élément transporteur, qui s'étend sur toute la largeur de la chambre de compression, ou en ce que le dispositif transporteur de fond (28) comprend au moins deux éléments transporteurs (31, 32 ; 63, 64) disposés l'un à côté de l'autre.

11. Presse à balles rondes selon l'une quelconque ou plusieurs des revendications précédentes, **caractérisée en ce que** le dispositif transporteur de fond (28) comprend plusieurs éléments transporteurs (31, 32, 33) disposés les uns derrière les autres ou une bande transporteuse (31, 32) en deux parties, à laquelle se rattache une seule bande transporteuse (33) disposée en amont de la chambre de compression (9), sachant que de préférence l'extrémité de la bande transporteuse (31, 32) est décalée vers le haut par rapport au début de la bande transporteuse (33) se rattachant.

12. Presse à balles rondes selon l'une quelconque ou plusieurs des revendications précédentes 1 à 11, **caractérisée en ce que** les éléments transporteurs (31 à 33 ; 63, 64) peuvent être entraînés séparément, et **en ce que** les vitesses desdits éléments transporteurs peuvent être ajustées indépendamment les unes des autres.
